Europäisches Patentamt

(19) European Patent Office

Office européen des brevets

(11) EP 0 799 841 A2

## (12) DEMANDE DE BREVET EUROPEEN

(43) Date de publication:
08.10.1997 Bulletin 1997/41

(51) Int. Cl.6: **C08F 10/02**, C08F 4/24, C08F 4/69

(21) Numéro de dépôt: 97200926.0

(22) Date de dépôt: 27.03.1997

(84) Etats contractants désignés:
AT BE DE ES FI FR GB IT SE

(30) Priorité: 05.04.1996 US 630959

(71) Demandeur: SOLVAY POLYOLEFINS EUROPE -
BELGIUM (Société Anonyme)
1050 Bruxelles (BE)

(72) Inventeurs:
• Johnson, Paul E.
Kingwood, Texas 77339 (US)

• Grosjean, Abel
Houston, Texas 77062 (US)
• Koch, Benoît
4280 Hannut (BE)

(74) Mandataire: Destryker, Elise Martine et al
Solvay Polyolefins Europe-Belgium
(Société Anonyme)
Département de la Propriété Industrielle
310, rue de Ransbeek
1120 Bruxelles (BE)

(54) **Polymère d'éthylène et corps creux obtenu de celui-ci**

(57) Polymère d'éthylène présentant une densité supérieure à 959 kg/m$^3$ et une résistance à la fissuration lente supérieure à 23 heures. Composition contenant ce polymère et corps creux obtenu en mettant en oeuvre au moins un tel polymère d'éthylène et procédé pour la fabrication dudit polymère.

## Description

La présente invention concerne un polymère d'éthylène présentant une combinaison de propriétés qui le rend particulièrement adapté à la fabrication de corps creux par extrusion- ou injection-soufflage et une composition contenant un tel polymère.

L'invention concerne aussi des corps creux obtenus en mettant en oeuvre ledit polymère d'éthylène ainsi qu'un procédé de préparation de ce polymère.

Il est connu que les polymères d'éthylène se prêtent bien à la fabrication de corps creux par extrusion- ou injection-soufflage.

Parmi ces polymères, les copolymères d'éthylène avec d'autre(s) $\alpha$-oléfine(s) conviennent particulièrement bien parce qu'ils présentent à la fois de bonnes propriétés mécaniques et une résistance à la fissuration satisfaisante.

Cependant leur densité est généralement insuffisante pour permettre une réduction du poids des corps creux sans perte des propriétés mécaniques et/ou de la résistance à la fissuration.

Pour remédier à ce défaut, il conviendrait d'augmenter la rigidité des copolymères ce qui peut se faire en augmentant leur densité.

Toutefois il est connu que l'augmentation de densité conduit généralement à une diminution de la résistance à la fissuration (voir par exemple "Failure of Plastics - E. W. Brostow, R.D. Corneliussen - Ed. Carl Hanser, (1986), p. 321, et SPE Journal, Mai 1959 p. 402).

Il s'avère dès lors difficile de produire, à partir de polymères d'éthylène, des corps creux de poids réduit présentant en outre des propriétés mécaniques satisfaisantes et une bonne résistance à la fissuration.

La présente invention vise à résoudre ce problème en fournissant un polymère d'éthylène qui présente à la fois une densité et une résistance à la fissuration élevées.

A cet effet la présente invention concerne un polymère d'éthylène présentant une densité supérieure à 959 kg/m$^3$ et une résistance à la fissuration lente supérieure à 23 heures.

Dans le cadre de la présente invention, la résistance à la fissuration lente est mesurée selon la norme ASTM D 1693-70 (1988), conditions A, par immersion d'une plaque, obtenue selon la norme ASTM D 1928-90 par compression du polymère, dans une solution aqueuse contenant 10 % en volume de nonylphénoxy-poly(éthylèneoxy)éthanol, à 50 °C.

La résistance à la fissuration lente est exprimée en heure.

Aux fins de la présente invention, on entend désigner par polymères d'éthylène, les homopolymères de l'éthylène ainsi que les copolymères de ce dernier avec au moins un comonomère choisi parmi les $\alpha$-oléfines contenant de 3 à 8 atomes de carbone telles que, de préférence, le 1-butène, le 1-hexène et le 1-octène.

Les homopolymères d'éthylène ainsi que les copolymères de ce dernier avec le 1-hexène contenant moins de 0,5 % molaire et plus particulièrement moins de 0,2 % molaire de 1-hexène conviennent particulièrement bien.

La densité des polymères d'éthylène selon l'invention est mesurée selon la norme ASTM D 4883-89.

Elle est de préférence supérieure à 960 kg/m$^3$.

La valeur maximale de la densité des polymères d'éthylène selon la présente invention n'est pas critique.

On préfère toutefois qu'elle soit inférieure ou égale à 970 kg/m$^3$.

Les polymères d'éthylène selon l'invention présentent avantageusement une résistance à la fissuration lente d'au moins 25 heures.

En pratique la valeur maximale de la résistance à la fissuration lente est rarement supérieure à 150 heures.

Les polymères d'éthylène selon l'invention présentent en outre avantageusement un indice de fluidité en fondu, HLMI, mesuré à 190 °C sous une charge de 21,6 kg selon la norme ASTM D 1238 (conditions F)(1986), d'au moins 10 g/10 min, en particulier d'au moins 15 g/10 min. Particulièrement préférés sont les polymères d'éthylène présentant un HLMI d'au moins 20 g/10 min.

Le HLMI ne dépasse en général pas 100 g/10 min, le plus souvent pas 70 g/10 min, et plus spécialement pas 50 g/10 min.

Des polymères d'éthylène préférés selon l'invention présentent en outre une viscosité dynamique, $\eta$, mesurée à un gradient de vitesse de 100s$^{-1}$ à 190 °C et exprimée en dPa.s, inférieure à 18000 dPa.s et plus particulièrement ne dépassant pas 17000 dPa.s. Ladite viscosité est en outre le plus souvent supérieure ou égale à 10000 dPa.s.

Par ailleurs, le taux de gonflement du polymère d'éthylène selon l'invention, $T_G$, est le plus souvent d'au moins 1,3 et de préférence d'au moins 1,5.

Dans le cadre de la présente invention, le taux de gonflement est déterminé par extrusion du polymère à 190°C et à un gradient de vitesse de 100s$^{-1}$, au travers d'une filière d'une longueur de 15 mm et d'un diamètre de 1 mm, à une vitesse constante et en mesurant le déplacement du piston nécessaire pour extruder un jonc de 70 mm.

Le taux de gonflement est alors calculé par la relation $T_G = 0,5707 \sqrt{e}$, dans laquelle e représente le déplacement du piston exprimé en mm.

Le cylindre et le piston du rhéomètre utilisé pour cette mesure répondent aux critères de celui utilisé pour la mesure de l'indice de fluidité selon la norme ASTM D 1238 (1986)

Les polymères selon la présente invention qui conduisent aux meilleurs résultats présentent en outre une résistance à la fissuration sous tension d'au moins 20 heures et plus particulièrement d'au moins 25 heures.

Dans le cadre de la présente invention, la résistance à la fissuration sous tension est mesurée selon le mode opératoire suivant.

On prépare par extrusion-soufflage du polymère à l'examen dix bouteilles cylindriques d'une capacité de 0,5 gallon (1,9 l) dont le diamètre est de 11,5 cm, la distance du fond à l'épaulement est de 15 cm et la distance de l'épaulement au col est de 9 cm.

Ces bouteilles sont ensuite vieillies pendant 40 heures à température ambiante avant d'être remplies d'une solution aqueuse à 10 % en volume de nonylphénoxy-poly(éthylèneoxy)éthanol de manière à ce que le ménisque du liquide soit situé à une distance de 2 cm du fond de la bouteille.

Ces bouteilles sont alors pressurisées à 2 psi (0,138 bar) avec de l'air puis scellées au moyen d'une capsule en aluminium puis thermostatisées à 60 °C.

La résistance à la fissuration sous tension est définie comme étant la moyenne des temps écoulés avant que la pression à l'intérieur des bouteilles ne chute de 0,1 psi (0,0069 bar).

Dans la pratique, il s'avère le plus souvent que la résistance à la fissuration sous tension est inférieure ou égale à 100 heures.

Les polymères d'éthylène selon la présente invention conviennent bien pour la fabrication d'objets façonnés et en particulier pour la fabrication de corps creux par injection- ou extrusion-soufflage.

En effet, ils permettent d'obtenir des objets et plus particulièrement des corps creux de faible poids présentant à la fois de bonnes propriétés mécaniques et une bonne résistance à la fissuration.

Lors de leur mise en oeuvre pour la fabrication d'objets façonnés, les polymères d'éthylène selon la présente invention se présentent le plus souvent sous la forme de compositions contenant un ou plusieurs additifs usuels tels que par exemples des anti-acides, antioxydants, des anti-UV, des colorants, des agents nucléants ou des agents antistatiques.

La quantité de chacun de ces additifs est habituellement d'au plus 5 parties en poids et de préférence d'au plus 1 partie en poids pour 100 parties en poids de polymère d'éthylène.

Des quantités inférieures ou égales à 0,5 partie en poids pour 100 parties en poids de polymère d'éthylène étant particulièrement recommandées.

Dès lors, la présente invention concerne également des compositions contenant au moins 90 % en poids d'un polymère d'éthylène tel que décrit ci-avant et plus particulièrement au moins 95 % en poids dudit polymère.

Les compositions contenant au moins 98 % en poids de polymère d'éthylène étant particulièrement préférées.

La présente invention concerne aussi des corps creux obtenus en mettant en oeuvre au moins un polymère d'éthylène tel que décrit ci-avant.

Les corps creux selon l'invention sont généralement obtenus dans des procédés d'extrusion- ou d'injection-soufflage dans lesquels on met en oeuvre une composition contenant au moins un polymère d'éthylène tel que décrit ci-avant.

Les compositions à base de polyéthylène décrites ci-avant conviennent particulièrement bien.

Les procédés de fabrication de corps creux par extrusion- ou injection-soufflage utilisables avantageusement selon l'invention sont bien connus de l'homme du métier.

Ils consistent en la fabrication par extrusion ou injection d'un corps creux en matériau fondu, appelé généralement préforme, qui est pincé entre deux demis moules puis soufflé jusqu'à ce qu'il soit plaqué contre les parois du moule.

L'extrusion ou l'injection se fait en général à une température d'environ 160 à environ 230°C.

Les corps creux préférés selon l'invention ont avantageusement un poids particulièrement faible ainsi qu'une résistance à la fissuration élevée et de bonnes propriétés mécaniques.

Enfin la présente invention concerne un procédé convenant particulièrement bien à la préparation du polymère d'éthylène décrit ci-avant dans lequel on met en oeuvre un solide catalytique contenant du chrome déposé sur un support.

Ce procédé consiste à polymériser l'éthylène éventuellement avec un ou plusieurs comonomères tels que définis ci-avant en présence d'un solide catalytique comprenant du chrome déposé sur un support contenant au moins deux constituants choisis parmi la silice (X), l'alumine (Y) et le phosphate d'aluminium (Z), éventuellement en présence d'un cocatalyseur.

Le solide catalytique peut être obtenu de manière connue en soi par imprégnation d'une poudre de support avec une solution aqueuse ou organique d'un composé du chrome, suivie d'un séchage en atmosphère oxydante.

Le composé du chrome peut être par exemple un sel soluble dans les milieux aqueux tel que les oxydes, l'acétate, le chlorure, le sulfate, les chromates et bichromates ou un sel soluble dans les milieux organiques tel que l'acétylacétonate.

Après imprégnation, le support est habituellement activé par chauffage à une température de 400 à 1000 °C de manière à transformer une partie au moins du chrome en chrome hexavalent.

Le solide catalytique selon l'invention peut également être obtenu par mélange mécanique du support avec un composé solide du chrome, par exemple de l'acétylacétonate de chrome et préactivation à une température inférieure à la température de fusion du composé du chrome avant activation comme décrit ci dessus.

La quantité de chrome présente dans le solide catalytique est généralement de 0,05 à 10 % en poids, de préférence de 0,1 à 5 % en poids, plus particulièrement de 0,25 à 2 % en poids par rapport au poids total du solide catalytique.

Le support présente avantageusement une surface spécifique (SS), mesurée selon la méthode volumétrique BET (norme britannique BS 4359/1 - 1984), d'au moins 100 m$^2$/g, en particulier d'au moins 180 m$^2$/g, les valeurs d'au moins 220 m$^2$/g étant les plus favorables. La SS est le plus souvent d'au plus 800 m$^2$/g, plus précisément d'au plus 700 m$^2$/g, les valeurs d'au plus 650 m²/g étant les plus courantes.

Le support présente en général une température de cristallisation d'au moins 700 °C, telle que par exemple d'au moins 1000 °C.

La température de cristallisation du support est déterminée en soumettant un échantillon du support à un traitement thermique à différentes températures et en examinant, après chaque traitement thermique, l'échantillon par diffraction des rayons X.

En outre le volume poreux du support (VP) est habituellement d'au moins 1,5 cm³/g, les valeurs d'au moins 1,7 m³/g étant recommandées.

Le VP est généralement d'au plus 5 cm³/g, en particulier d'au plus 4,5 cm³/g, les valeurs d'au plus 4 cm³/g étant courantes.

Le volume poreux (VP) est la somme du volume poreux constitué par les pores de rayon inférieur ou égal à 75 Å, mesuré par la méthode de pénétration à l'azote (BET) (norme britannique BS 4359/1 - 1984), et du volume poreux mesuré par la méthode de pénétration au mercure au moyen du porosimètre de type PORO 2000 commercialisé par CARLO ERBA CO (norme belge NBN B 05-202 - 1976).

Des supports préférés présentent une SS et un VP tels que:

$$SS < (VP \times 564 - 358),$$

dans laquelle SS et VP sont respectivement exprimés en m²/g en cm³/g.

Lorsque le support ne contient que deux des constituants précités, il contient avantageusement la silice et l'alumine dans un rapport molaire de 0,01 à 99 (de préférence de 0,05 à 20), la silice (X) et le phosphate d'aluminium (Z) dans un rapport molaire de 0,01 à 99 (de préférence de 0,05 à 20), l'alumine (Y) et le phosphate d'aluminium (Z) dans un rapport molaire de 0,01 à 99 (de préférence de 0,05 à 20).

Lorsque le support contient la silice (X), l'alumine (Y) et le phosphate d'aluminium (Z) le pourcentage molaire de ces différents constituants est généralement tel que (X):(Y):(Z) est de (10 à 95):(0,5 à 80):(1 à 85), et plus particulièrement tel que (X):(Y):(Z) est (20 à 80):(0,5 à 60):(5 à 60).

Le support peut éventuellement contenir en outre du titane.

La quantité de titane, exprimée en pourcentage molaire de $TiO_2$ par rapport au support contenant la silice (X), l'alumine (Y), le phosphate d'aluminium (Z) et le $TiO_2$, est en général au moins égale à 0,1 % mol, de préférence à 0,5 % mol; les valeurs d'au moins 1 % mol étant les plus courantes.

Cette quantité ne dépasse pas le plus souvent 40 % mol, plus particulièrement pas 20 % mol, les valeurs d'au plus 15 % mol étant recommandées.

Le support se présente le plus souvent à l'état d'une poudre dont les grains ont un diamètre de 20 à 200 μm. Le poids spécifique apparent du support est le plus souvent supérieur ou égal à 50 kg/m³, en particulier à 100 kg/m³; il est généralement au maximum égal à 500 kg/m³, typiquement à 300 kg/m³.

Le poids spécifique apparent est mesuré par écoulement libre selon le mode opératoire suivant : dans un récipient cylindrique de 50 cm³, on verse la poudre du support sans la tasser, depuis une trémie dont le bord inférieur est disposé à 20 du bord supérieur du récipient.

On pèse ensuite le récipient rempli de la poudre et arasé à l'aide d'une latte rectiligne, on déduit la tare du poids relevé et on divise le résultat obtenu (exprimé en g) par 50.

Le support peut être obtenu selon un procédé consistant à mélanger, dans une première étape, un alcool, de l'eau, un alcoolate de silicium et un acide dans des quantités telles que le rapport molaire eau/silicium soit de 2 à 50, à ajouter au milieu d'hydrolyse ainsi obtenu, dans une deuxième étape, une solution acide d'un composé d'aluminium et une solution d'une source d'ions phosphates, et, dans une troisième étape, un agent de précipitation pour obtenir un précipité qui est lavé, dans une quatrième étape, à l'eau puis avec un liquide organique, et séché, dans une cinquième étape, par distillation jusqu'à l'obtention d'une poudre qui est calcinée.

L'alcoolate de silicium comprend de préférence un groupement alkoxy de 1 à 20 atomes de carbone.

Des alcoolates de silicium qui conviennent bien sont le tétra-méthylate et le tétra-isopropylate de silicium et plus particulièrement le tétra-éthylate. Les alcools aliphatiques linéaires tels que par exemple l'éthanol, l'isopropanol et le méthanol sont préférés. Avantageusement le groupement hydrocarboné de l'alcool correspond à celui du groupement alkoxy de l'alcoolate de silicium utilisé.

La première étape est avantageusement réalisée à pH acide et comprend, d'une part, l'adjonction de l'eau, de l'acide, de l'alcoolate de silicium et de l'alcool à une température généralement inférieure ou égale à 30 °C, les températures supérieures à 0 °C étant recommandées, et, d'autre part, un mûrissage du milieu réactionnel obtenu à une température au moins égale à 20 °C et inférieure à la température d'ébullition du milieu (les températures de 40 à 80 °C étant les plus courantes et celles de 50 à 70 °C étant recommandées), de manière à substituer une partie au moins des groupements alkoxy de l'alcoolate de silicium par des groupements hydroxy, sans qu'il se produise une gélification ou une précipitation de silice.

Dans la première étape, le pH du milieu réactionnel est en général inférieur à 3, de préférence de 0,5 à 2,5.

L'acide mis en oeuvre à la première étape peut être un acide minéral tel que par exemple l'acide chlorhydrique, nitrique, phosphorique ou sulfurique ou un acide organique.

L'acide chlorhydrique convient particulièrement bien.

De préférence, le mûrissage est réalisé à une température supérieure à celle de l'addition des réactifs.

Le mûrissage a pour fonction de permettre une hydrolyse et une condensation partielles de l'alcoolate de silicium.

La deuxième étape du procédé particulier d'obtention du support consiste à ajouter au milieu issu de la première étape une solution acide d'un composé d'aluminium et une solution d'une source d'ions phosphates.

Le composé d'aluminium peut être choisi parmi les sels inorganiques d'aluminium et les alcoolates d'aluminium.

Les alcoolates d'aluminium contenant des groupements aliphatiques linéaires saturés non substitués contenant de préférence de 1 à 20 atomes de carbone sont recommandés et parmi ceux-ci, ceux dont le groupement alkoxy correspond à celui de l'alcoolate de silicium.

Le nitrate et le chlorure d'aluminium conviennent également.

Aux fins de la présente invention, on entend désigner par source d'ions phosphates tout composé susceptible de former des ions phosphates et spécialement les sels inorganiques phosphatés, les éthers sels phosphatés et l'acide phosphorique.

Dans la deuxième étape du procédé d'obtention du support, on préfère opérer de manière très lente pour éviter que le milieu ne s'échauffe.

La température du milieu est généralement inférieure à 30 °C, typiquement inférieure ou égale à 20 °C, par exemple comprise entre 0 et 10 °C.

La troisième étape consiste à former un précipité sous l'effet d'un agent de précipitation, qui peut être choisi parmi tous les composés susceptibles d'induire une coprécipitation des réactifs obtenus aux étapes antérieures à savoir l'alcoolate de silicium hydrolysé et partiellement condensé, le composé d'aluminium et la source d'ions phosphates, sous la forme d'un oxyde mixte de silicium, d'aluminium et de phosphore.

On peut citer comme exemples d'agent de précipitation, l'oxyde d'éthylène, le carbonate d'ammonium et l'hydroxyde d'ammonium.

On utilise de préférence une solution aqueuse d'hydroxyde d'ammonium.

Le pH du milieu de coprécipitation est généralement supérieur ou égal à 5, typiquement supérieur ou égal à 6; il est habituellement inférieur à 11, les valeurs inférieures à 10 étant recommandées.

De préférence, on maintient le pH constant pendant toute la durée de la coprécipitation.

La quatrième étape consiste en un lavage à l'eau du précipité de manière à en éliminer les impuretés suivi de l'élimination d'une partie au moins de cette eau par tout moyen adéquat, tel que la filtration ou de préférence la centrifugation.

Ensuite, le précipité est soumis à un lavage au moyen d'un liquide organique de manière à en éliminer l'eau.

Le liquide organique présente préférentiellement une température de vaporisation inférieure à 120 °C, par exemple de 70 à 90 °C.

Les alcools, les éthers ou leurs mélanges conviennent bien et parmi ceux-ci les alcools comprenant de 1 à 4 atomes de carbone tel que l'isopropanol.

Le précipité lavé est ensuite soumis à un séchage par atomisation ou par distillation, de préférence azéotropique, afin d'évaporer l'eau et le liquide organique non éliminés précédemment, jusqu'à l'obtention d'une poudre du support.

La poudre du support est alors soumise à une calcination généralement poursuivie jusqu'à ce que le poids de la poudre reste constant au cours du temps, tout en évitant une cristallisation de la poudre.

La calcination peut être effectuée sous air, de préférence sec, dans un lit fluidisé à une température inférieure à la température de cristallisation de la poudre.

La température est en général de 300 à 1500 °C, typiquement de 350 à 1000 °C, de préférence de 400 à 600 °C.

Les solides catalytiques préférés selon l'invention contiennent de 0,05 à 10 % en poids de chrome déposé sur un support obtenu selon le procédé décrit ci-avant et contenant essentiellement de la silice (X) et du phosphate d'aluminium (Z) dans un rapport molaire de 0,6 à 1,5 et pouvant contenir jusqu'à 10 % en poids d'alumine (Y). Les polymères d'éthylène selon l'invention sont donc avantageusement obtenus par polymérisation de l'éthyléne et éventuellement d'un comonomère en présence d'un solide catalytique décrit ci-avant.

Cette polymérisation peut être effectuée en présence d'un cocatalyseur généralement choisi parmi les acides de Lewis. Les composés organoboriques conviennent particulièrement bien car ils permettent d'obtenir des polymères d'éthylène présentant à la fois une densité plus élevée, une meilleure résistance à la fissuration et une aptitude à la mise en oeuvre plus élevée.

Les trialkylbores dont les chaînes alkyles comprennent jusqu'à 20 atomes de carbone sont le plus souvent préférés et plus particulièrement ceux dont les chaînes alkyles sont droites et comprennent jusqu'à 18 atomes de carbone, de préférence de 2 à 8 atomes de carbone. Le triéthylbore donne de bons résultats.

La quantité totale de cocatalyseur mise en oeuvre est en général de 0,02 à 50 mmoles par litre de solvant, de diluant ou de volume de réacteur et de préférence de 0,2 à 2,5 mmoles par l.

Cette quantité est en outre le plus souvent telle que le rapport molaire entre le composé organoborique et le chrome présent dans le solide catalytique est d'au moins 0,1 et plus particulièrement d'au moins 0,8.

Ce rapport est en outre favorablement d'au plus 20 et plus particulièrement d'au plus 10.

Un procédé particulièrement bien adapté à la fabrication des polymères d'éthylène préférés selon l'invention consiste à polymériser de l'éthylène éventuellement en présence de 1-hexène à l'intervention d'un solide catalytique contenant de 0,05 à 10 % en poids de chrome déposé sur un support contenant essentiellement de la silice (X) et du phosphate d'aluminium (Z) dans un rapport molaire de 0,6 à 1,5, pouvant contenir jusqu'à 10 % en poids d'alumine (Y) et d'un composé organoborique à titre de cocatalyseur.

Selon l'invention la polymérisation de l'éthylène peut être effectuée selon tout procédé connu, en solution dans un solvant qui peut être l'oléfine elle-même à l'état liquide, ou en suspension dans un diluant hydrocarboné, ou encore en phase gazeuse dans un ou plusieurs réacteurs en série.

On obtient de bons résultats lorsque la polymérisation de l'éthylène est effectuée dans un seul réacteur et de préférence en suspension.

Il va de soi que la polymérisation de l'éthylène peut être effectuée en présence d'un agent de transfert tel que par exemple de l'hydrogène.

Les exemples qui suivent sont destinés à illustrer l'invention.

La signification des symboles utilisés dans ces exemples et, le cas échéant, les unités exprimant les grandeurs mentionnées et les méthodes de mesure de ces grandeurs sont explicitées ci-dessous.

HLMI = indice de fluidité en fondu du polymère d'éthylène.
d = densité du polymère d'éthylène.
ESCR - A = résistance à la fissuration lente.
$\eta$ = viscosité dynamique du polyéthylène.
$T_G$ = taux de gonflement du polymère d'éthylène.
ESCR-CPBT = résistance à la fissuration sous tension.
COMP = indice de compression mesuré exprimé en lb (3,453 kg)(norme ASTM D 2659).

Exemple 1R (de référence)

Dans cet exemple on a préparé un copolymère d'éthylène dans un seul réacteur à l'aide d'un catalyseur au chrome sur un support en silice et on a mesuré ses propriétés mécaniques, sa densité et sa résistance à la fissuration.

A. Préparation du solide catalytique

On a utilisé le catalyseur commercial EP30X de la société CROSFIELD comprenant 1 % en poids de Cr supporté sur de la silice.

On a calciné le catalyseur dans un lit fluidisé à 845 °C pendant 10 heures sous air sec et on a recueilli le solide catalytique.

B. Polymérisation d'éthylène en un seul réacteur

On a introduit dans un réacteur de polymérisation de l'isobutane, de l'éthylène et du 1-hexène dans un rapport molaire 1-hexène/éthylène de 0,015 ainsi que le solide catalytique obtenu en A.

La pression totale dans le réacteur et la température étaient respectivement de 4 MPa et 102 °C.

Le polymère obtenu présentait les caractéristiques suivantes :

HLMI = 20
ESCR-A = 23
$\eta$ = 16000
$T_G$ = 1,66
d = 954,9
COMP = 44.5
Teneur en 1-hexène : < 0,1 % molaire

On a préparé par injection-soufflage de ce polymère des flacons dont on a mesuré la résistance à la fissuration sous tension selon le mode opératoire décrit ci-avant.

La valeur obtenue (ESCR-CPBT) était de 16,4.

Exemple 2 (conforme à l'invention)

A. Préparation du solide catalytique

A.1. On a ajouté à une solution de tétra-éthylate de silicium et d'éthanol à une température de 10 °C, une solution aqueuse d'acide chlorhydrique 1M, de manière à obtenir un pH de 1. Les quantités mises en oeuvre étaient : 34,7 g de tétra-éthylate de silicium, 41,7 g d'éthanol, 18,9 g d'eau et 11,5 g d'acide chlorhydrique. Ensuite, ce milieu réactionnel a été soumis à un mûrissage à 60°C pendant 2 heures.

A.2. En parallèle, on a préparé une solution aqueuse contenant 62,5 de nitrate d'aluminium hydraté, 17,1 g d'une solution aqueuse d'acide phosphorique à 85 % et 33,3 g d'eau que l'on a ajouté au milieu réactionnel obtenu en A.1, sous agitation vigoureuse et à 10 °C.

A.3. On a ajouté à 500 g d'une solution aqueuse d'hydroxyde d'ammonium de pH 8 thermostatisée à 10 °C, le mélange obtenu en A.2, en maintenant le pH constant, afin d'effectuer une précipitation et on a soumis le précipité à une maturation à pH 8, pendant 2 heures, sous agitation et à 60 °C.

A.4. Le précipité ainsi obtenu a été lavé à l'eau et puis avec de l'isopropanol.

A.5. On a séché le précipité obtenu en A.4 par atomisation jusqu'à l'obtention d'une poudre.

A.6. La poudre obtenue en A.5 a été calcinée dans un lit fluidisé sous balayage d'air sec, pendant 4 heures à 500 °C de manière à obtenir une poudre comprenant 15,6 % en poids de Si, 15,1 % en poids d'Al, 16,3 % en poids de P répondant à la formule générale suivante $SiO_2.AlPO_4$.

A.7 On a mélangé le support obtenu en A.6 avec de l'acétylacétonate de chrome en une quantité telle que le mélange comprenne 0,7 % en poids de chrome. Puis, on a traité ce mélange dans un lit fluidisé à 150 °C pendant 2 heures sous balayage d'air sec et on l'a calciné dans le lit fluidisé à 600 °C pendant 10 heures sous air sec.

## B. Polymérisation d'éthylène dans un seul réacteur

On a introduit en continu dans un réacteur de polymérisation de l'isobutane, de l'éthylène, de l'hydrogène dans un rapport molaire hydrogène/éthylène de 0,032 et le solide catalytique obtenu en A.

La pression totale dans le réacteur et la température étaient respectivement de 4 MPa et 106 °C.

Après granulation, le polymère obtenu présentait les caractéristiques suivantes :

HLMI    = 31,5
ESCR-A  = 37,6 h
$\eta$      = 16700
$T_G$      = 1,6
d       = 960,6
COMP    = 56,1

La résistance à la fissuration lente de ce polymère mesurée sur des flacons tel que décrit ci-avant était de 30 heures.

Ce polymère d'éthylène présentait donc, outre un densité élevée, une résistance à la fissuration élevée et de bonnes propriétés mécaniques; il convenait particulièrement bien pour la fabrication de corps creux à poids réduit par extrusion- ou injection-soufflage.

## Exemple 3 (conforme à l'invention)

Dans cet exemple on a reproduit en tout point l'exemple 2 sauf que la polymérisation de l'éthylène a été effectuée à une température de 100 °C, en l'absence d'hydrogène et en ajoutant au milieu de polymérisation du triéthylbore dans des quantités telles que le rapport molaire de ce composé au chrome contenu dans le solide catalytique était de 1,7.

Le polymère obtenu après granulation présentait les caractéristiques suivantes :

HLMI        = 67,7
ESCR-A      = 66,7 h
$\eta$          = 10300
$T_G$          = 1,77
d           = 961,7
COMP        = 52,3
ESCR-CPBT   = 45

## Exemple 4 (conforme à l'invention)

On a reproduit l'exemple 2 sauf que le solide catalytique a été calciné (point A.7) à une température de 815 °C, que l'on a pas mis en oeuvre d'hydrogène à la polymérisation et que la température du réacteur était de 106,5 °C.

Le polymère d'éthylène après granulation était caractérisé par un ESCR-A de 26,8, un $\eta$ de 13890, une d de 963,8.

## Exemple 5 (conforme à l'invention)

L'exemple 5 a été réalisé en reproduisant l'exemple 3 en tout point sauf que la température de calcination du solide catalytique (point A.7) était de 815 °C et que la température de polymérisation était de 103 °C.

Le polymère d'éthylène après granulation était caractérisé par un ESCR-A de 38, un $\eta$ de 10350 et une d de 964,8.

On a constaté que les polymères obtenus en présence d'un composé organoborique présentaient à la fois une densité et une résistance à la fissuration lente supérieure à celle mesurée sur les polymères d'éthylène obtenus en l'absence dudit composé.

Par ailleurs leur viscosité dynamique, plus basse, leur conférait une meilleure aptitude à la mise en oeuvre.

## Revendications

1. Polymère d'éthylène présentant une densité supérieure à 959 kg/m$^3$ et une résistance à la fissuration lente supérieure à 23 heures.

2. Polymère selon la revendication 1, choisi parmi les homopolymères de l'éthylène et les copolymères de ce dernier avec le 1-hexène contenant moins de 0,5 % molaire de 1-hexène.

3. Polymère d'éthylène selon la revendication 1, présentant un indice de fluidité en fondu, HLMI, d'au moins 20 g/10 min.

4. Polymère d'éthylène selon la revendication 1, présentant une viscosité dynamique, $\eta$, inférieure à 18000 dPa.s.

5. Polymère d'éthylène selon la revendication 1, présentant une résistance à la fissuration sous tension d'au moins 20 heures.

6. Composition contenant au moins 90 % en poids d'un polymère d'éthylène selon la revendication 1.

7. Corps creux obtenu par mise en oeuvre d'au moins un polymère d'éthylène selon la revendication 1.

8. Procédé de préparation d'un polymère d'éthylène selon la revendication 1, dans lequel on polymérise de l'éthylène et éventuellement un ou plusieurs comonomères en présence d'un solide catalytique comprenant du chrome déposé sur un support contenant au moins deux constituants choisis parmi la silice (X), l'alumine (Y) et le phosphate d'aluminium (Z) et éventuellement d'un cocatalyseur.

9. Procédé selon la revendication 8, dans lequel on polymérise de l'éthylène éventuellement en présence de 1-hexène en présence d'un solide catalytique qui comprend de 0,05 à 10 % en poids de chrome déposé sur un support contenant essentiellement de la silice (X) et du phosphate d'aluminium (Z) dans un rapport molaire de 0,6 à 1,5 et pouvant contenirjusqu'à 10 % en poids d'alumine (Y).

10. Procédé selon la revendication 8, dans lequel le cocatalyseur est un composé organoborique.